# EUROPEAN PATENT APPLICATION

(11) **EP 4 667 274 A1**
(43) Date of publication of application: **24.12.2025**
(21) Application number: 24182712.0
(22) Date of filing: 17.06.2024
(51) Int. Cl.: B60L 7/22, B60L 15/20, B60L 50/15, B60L 50/61, B60L 50/75

(54) **CONTROLLABLE ENERGY DISSIPATION OF AN ENERGY SYSTEM IN A VEHICLE**

(71) Applicant: VOLVO TRUCK CORPORATION, 405 08 Göteborg (SE)
(72) Inventor: RAHM, Fredrik, 242 96 HÖRBY (SE); CARLÉN ANDERSSON, Johan, 227 38 LUND (SE)
(74) Representative: Kransell & Wennborg KB

(57) **Abstract**

The present disclosure relates to an arrangement for a vehicle, the arrangement comprising an electric traction motor, an energy system comprising a traction battery, the energy system being configured to feed electric energy from the traction battery to the electric traction motor in a first load condition, and configured to receive electric energy generated by the electric traction motor in a second load condition, and an energy dissipater electrically connected to the energy system, wherein the arrangement further comprises processing circuitry configured to determine an indication of a load condition change of the energy system from the first load condition to the second load condition, and control the energy system to feed electric energy to the energy dissipater in response to the indication of the load condition change.

## Description

### TECHNICAL FIELD

The disclosure relates generally to energy management for a vehicle propelled at least by an electric traction motor. In particular aspects, the disclosure relates to controllable energy dissipation of an energy system in a vehicle. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

During operation of a vehicle propelled by at least one electric traction motor, a traction battery can be exposed to changes in load conditions. For example, electric energy is fed from the traction battery to the electric traction motor during propulsion, while electric energy generated by the electric traction motor can be fed to the traction battery during braking. Sudden and rapid changes in the load conditions may negatively affect the traction battery and it is therefore a desire to provide an arrangement that can improve the overall operational lifetime of the traction battery.

### SUMMARY

According to a first aspect of the disclosure, there is provided an arrangement for a vehicle, the arrangement comprising an electric traction motor, an energy system comprising a traction battery, the energy system being configured to feed electric energy from the traction battery to the electric traction motor in a first load condition, and configured to receive electric energy generated by the electric traction motor in a second load condition, and an energy dissipater electrically connected to the energy system,
wherein the arrangement further comprises processing circuitry configured to determine an indication of a load condition change of the energy system from the first load condition to the second load condition, and control the energy system to feed electric energy to the energy dissipater in response to the indication of the load condition change.

The first aspect of the disclosure may seek to reduce rapid transient of electric energy fed to the traction battery. In particular, the disclosure aims at reducing rapid transient charge pulses to the traction battery, especially rapid changes when the traction battery changes from a condition or state in which electric energy is fed to the electric traction motor, to a second condition or state in which the traction battery receives a rapid charge pulse. A technical benefit may include that the operational lifetime of the traction battery may be prolonged. By means of the energy dissipater, power spikes to the traction battery may be suppressed and the traction battery, as well as electrical components of the energy system, may not be negatively affected by these power spikes occurring when the energy system changes from the first load condition to the second load condition.

As defined above, the energy system comprises the traction battery. When the energy system assumes the first load condition, electric energy may be fed from the traction battery to the electric traction motor. However, and as will be described further below, the energy system may in addition comprise an energy generating arrangement, which energy generating arrangement can feed electric energy directly to the electric traction motor, i.e. not via the traction battery. In the second load condition, the electric energy generated by the electric traction motor is fed to the energy system. The generated electric energy may be fed to the energy dissipater without entering the traction battery, i.e. the energy system provides a bypass of the traction battery and enables the generated electric energy to be directly fed to the energy dissipater. According to a non-limiting example, the energy system may comprise a junction box or other controller for bypassing the traction battery.

Moreover, the indication of a load condition change may be a determination of an actual load condition change, or that an upcoming load condition change is impending. As a non-limiting example, a Global Positioning System (GPS) in combination with map data may inform the processing circuitry that a future load condition change will take place. As a further non-limiting example, the processing circuitry may receive an indication of an impending load condition change from a transmission system indicating an upcoming gear change during which a change in load condition may occur.

Optionally in some examples, including in at least one preferred example, the energy system may comprise an electric component arrangement via which electric energy can be fed between at least the electric traction motor and the traction battery.

Optionally in some examples, including in at least one preferred example, the processing circuitry is further configured to determine a charge power ability of the traction battery, determine a charge power level received by the energy system when assuming the second load condition, and control the energy system to feed electric energy to the energy dissipater in further response to the charge power level exceeding the charge power ability. The charge power ability of the traction battery should preferably be construed as the ability to charge power. For example, an almost fully charged traction battery may be less susceptible to receive a high power level of electric energy. Put it differently, the traction battery may be able to receive a higher power level of electric energy for a lower state of charge level compared to when the state of charge level is above a certain threshold level above the lower state of charge level. As a non-limiting example, the charge power ability of the traction battery may be reduced when the state of charge level reaches e.g. 80 - 85% of the full capacity of the traction battery. The charge power ability may be affected by other parameters as well, such as e.g. temperature of the battery, size of the battery, the number of battery cells, battery state of health, battery age, etc. The energy throughput of the traction battery during its operational lifetime may also be a parameter affecting the charge power ability, where the energy throughput refers to the energy received by the traction battery as well as the energy discharged from the traction battery during the operational lifetime of the traction battery. The charge power level received by the energy system when assuming the second load condition may be referred to as a charging power, or level of charging power, received by the energy system.

A technical benefit may include that if the charge level received by the energy system during the second load condition exceeds the charge power ability of the traction battery, the energy system feeds electric energy to the energy dissipater, thereby putting the traction battery to less strain and in turn improves the battery state of health.

Optionally in some examples, including in at least one preferred example, the energy system further comprises an energy generating arrangement connected to the traction battery, the energy generating arrangement being configured to generate electric energy when the energy system assumes the first load condition, wherein the processing circuitry is configured to control the energy generating arrangement to generate electric energy also when the energy system changes load condition from the first load condition to the second load condition. A technical benefit may include that the energy generating arrangement can proceed to generate electric energy also when changing to the second load condition. In particular, the energy generating arrangement can operate in its sweet spot condition during the first load condition, i.e. operate in an optimum mode of operation. When the energy system changes load condition from the first load condition to the second load condition, the energy generating arrangement can continue in its sweet spot load condition. Thus, the energy generating arrangement can be more or less unaffected by the load condition change. This may be particularly advantageous for energy generating arrangements that ramp up their generating of power to reach their sweet spot load condition. In turn, when the energy system subsequently assumes the first load condition, the energy generating arrangement is directly operating at its sweet spot and energy is generated at a relatively high level thereby increasing the range of operation for the electric traction motor.

Optionally in some examples, including in at least one preferred example, the processing circuitry is further configured to control the energy generating arrangement to generate electric energy during the second load condition. A technical benefit may include, as indicated above, that the electric generator can be controlled to generate electric energy at its sweet spot operating condition throughout the second load condition, thereby being less affected by the load condition change.

Optionally in some examples, including in at least one preferred example, the energy generating arrangement is configured to generate electric energy at a first power state when the energy system assumes the first load condition, and wherein the processing circuitry is configured to control the energy generating arrangement to generate electric energy at the first power state when the electric system changes load condition from the first load condition to the second load condition. The first power state should be construed as a power level as well as an increase in power level, i.e. a rate of change in power level. Thus, if the energy generating arrangement is ramping up its power generation, the first power state should be construed as an increase rate of power. Thus, the first power state may also be referred to as a parameter indicative of first power level.

Optionally in some examples, including in at least one preferred example, the processing circuitry is configured to determine a charge power ability of the traction battery, determine a surplus power level, the surplus power level being a difference between a power level generated, in the second load condition, by the energy generating arrangement and the electric traction motor, and the charge power ability of the traction battery, and control the energy system to feed electric energy corresponding to the surplus power level to the energy dissipater in response to indication of the load condition change. The surplus power level should thus be construed as the level of electric power that cannot be absorbed by the traction battery. The processing circuitry thus determines a total power level generated by the energy generating arrangement and the electric traction motor and compare this total power level with the charge power ability of the traction battery.

Optionally in some examples, including in at least one preferred example, the energy generating arrangement comprises a fuel cell electrically connected to the traction battery. The fuel cell may ramp up to reach its sweet spot load condition at a relatively slow rate. By allowing the energy system to feed electric energy to the energy dissipated in the second load condition, a technical benefit may include that the fuel cell may be unaffected by the load condition change and continue to ramp up its energy production also during the load condition change as well as when the energy system changes and assume the second load.

Optionally in some examples, including in at least one preferred example, the fuel cell is electrically connected to the energy dissipater. A technical benefit may include that electric energy can be fed directly from the fuel cell to the energy dissipater when the energy system assumes the second load condition.

Optionally in some examples, including in at least one preferred example, the processing circuitry is configured to control the energy system to feed electric energy from at least one of the fuel cell and the traction battery to the energy dissipater in response to the load condition change. According to an example, the processing circuitry can select which of the fuel cell and the traction battery that is best fit to feed electric energy to the energy dissipater. A technical benefit may include that the processing circuitry can select which of the fuel cell and the traction battery that is, in the current situation, best fit to feed electric energy to the energy dissipater. The processing circuitry can hereby simply determine the net level of electric energy to be fed to the energy dissipater and feed this level of energy from any, or both, of the fuel cell and the traction battery to the energy dissipater.

Optionally in some examples, including in at least one preferred example, the energy generating arrangement comprises an electric generator mechanically connectable to an internal combustion engine, the electric generator being connected to the traction battery. The electric generator may hereby generate electric power by operation of the internal combustion engine. The internal combustion engine may be a hydrogen internal combustion engine. The electric generator may in turn be electrically connected to the electric traction motor. The internal combustion engine, the electric generator and the electric traction motor may hereby form a serial hybrid arrangement.

Optionally in some examples, including in at least one preferred example, the electric generator is electrically connected to the energy dissipater. A technical benefit may include that electric energy can be fed directly from the electric generator to the energy dissipater when the energy system assumes the second load condition. The internal combustion engine may hereby continue to operate in substantially the same operating condition in the second load condition as in the first load condition.

Optionally in some examples, including in at least one preferred example, the processing circuitry is configured to control the energy system to feed electric energy from at least one of the electric generator and the traction battery to the energy dissipater in response to the load condition change. A technical benefit may include that the processing circuitry can select at least one of the electric generator and the traction battery that is, in the current situation, best fit to feed electric energy to the energy dissipater. The processing circuitry can hereby simply determine the net level of electric energy to be fed to the energy dissipater and feed this level of energy from any, or both, of the electric generator and the traction battery to the energy dissipater.

Optionally in some examples, including in at least one preferred example, the processing circuitry is configured to determine the indication of the load condition change in response to receiving a request of an anticipated change in load condition from the first load condition to the second load condition, wherein the processing circuitry is further configured to control the energy system to feed electric energy to the energy dissipater prior to the load condition change. A technical benefit may include that the processing circuitry can control the energy system to initiate feeding of electric energy to the energy dissipater slightly in advance of the load condition change.

Optionally in some examples, including in at least one preferred example, the processing circuitry is configured to determine the load condition change in response to an anticipated gear state change of the vehicle. A gear state change may cause a relatively rapid and high transient of electric energy from the electric traction motor to the energy system, and a technical benefit may therefore include that the traction battery can be protected from this high and rapid transient. In addition, the time period for performing a gear change may be reduced. As such, improved acceleration of the vehicle may be obtained.

Optionally in some examples, including in at least one preferred example, the energy dissipater comprises an air compressor, the air compressor being configured to dissipate electric energy by pressurizing a flow of air. A technical benefit may include that the air compressor can be rapidly energized by electric energy from the energy system to pressurize the flow of air, to thereby dissipate electric energy. The air compressor may thus connected to the energy system.

Optionally in some examples, including in at least one preferred example, the energy dissipater further comprises an electric motor mechanically connected to the air compressor, the electric motor being electrically connected to the energy system.

Optionally in some examples, including in at least one preferred example, the energy dissipater comprises a resistor arrangement. A technical benefit may include that the resistor arrangement can be rapidly energized by electric energy from the energy system, to thereby dissipate electric energy. The resistor arrangement may thus be electrically connected to the energy system.

Optionally in some examples, including in at least one preferred example, the resistor arrangement is an air-cooled resistor arranged in downstream fluid communication with the air compressor. A technical benefit may include that electric energy can be dissipated by two different arrangements thereby enabling for a larger amount of dissipatable electric energy. In addition, the air pressurized by the air compressor can advantageously be used to cool the air-cooled resistor, hence forming a dual technical advantage to the serial communication between the air compressor and the air-cooled resistor.

According to a second aspect, there is provided a method of controlling an energy distribution in an arrangement of a vehicle, the arrangement comprises an electric traction motor, an energy system comprising a traction battery, the energy system being configured to feed electric energy from the traction battery to the electric traction motor in a first load condition, and configured to receive electric energy generated by the electric traction motor in a second load condition, and an energy dissipater electrically connected to the energy system, the method comprising determining an indication of a load condition change of the energy system from the first load condition to the second load condition, and controlling the energy system to feed electric energy to the energy dissipater in response to the indication of the load condition change.

Effects and features of the second aspect are largely analogous to those described above in relation to the first aspect. Thus, any feature described in relation to the first aspect can be combined with the features of the second aspect.

According to a third aspect, there is provided a computer program product comprising program code for performing, when executed by the processing circuitry, the method of the second aspect.

According to a fourth aspect, there is provided a non-transitory computer-readable storage medium comprising instructions, which when executed by the processing circuitry, cause the processing circuitry to perform the method of the second aspect.

Effects and features of the third and fourth aspects are largely analogous to those described above in relation to the first aspect.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

### BRIEF DESCRIPTION OF THE DRAWINGS

Examples are described in more detail below with reference to the appended drawings.
Fig. 1 is an exemplary illustration of a vehicle according to an example,
Fig. 2 is an exemplary illustration of an arrangement for the vehicle according to an example,
Fig. 3 is an exemplary illustration of the arrangement with an energy generator in the form of a fuel cell according to an example,
Fig. 4 is an exemplary illustration of the arrangement with an energy generator in the form of an electric generator arranged parallel with an internal combustion engine according to an example,
Fig. 5 is an exemplary illustration of the arrangement according to a further example,
Fig. 6 is an exemplary graph illustration operation of the arrangement according to an example,
Fig. 7 is an exemplary flow chart of a method of controlling an energy distribution in the arrangement according to an example, and
Fig. 8 is a schematic diagram of an exemplary computer system for implementing examples disclosed herein, according to an example.

### DETAILED DESCRIPTION

The detailed description set forth below provides information and examples of the disclosed technology with sufficient detail to enable those skilled in the art to practice the disclosure.

The following description of the disclosure aims at describing an arrangement that seeks to reduce rapid transient of electric energy fed to the traction battery. In particular, the disclosure aims at reducing rapid transient charge pulses to the traction battery, especially rapid changes when the traction battery changes from a state or condition in which electric energy is fed to the electric traction motor, to a second state or condition in which the traction battery receives a rapid charge pulse.

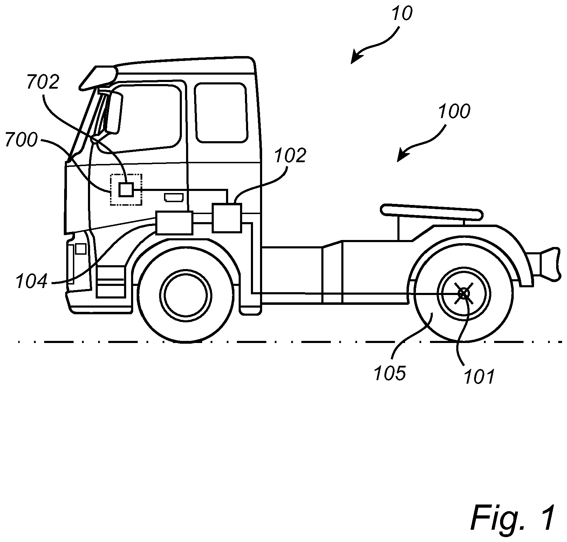

With reference to Fig. 1 which is an exemplary illustration of a vehicle according to an example. Fig. 1 illustrates a vehicle 10 in the form of a truck. The vehicle 10 comprises an electric traction motor 101. The traction motor 101 is preferably an electric machine 101 operable to propel at least one pair of wheels 105 of the vehicle 10, and to generate electric energy during braking. The vehicle 10 also comprises an energy system 102 as well as an energy dissipater 104. The electric traction motor 101, the energy system 102 and the energy dissipater 104 forms part of an arrangement 100 of the vehicle 10. The vehicle 10 in Fig. 1 also comprises a computer system 700. The computer system comprises processing circuitry 702 operable to control the energy system 102 as will be exemplified in further detail below.

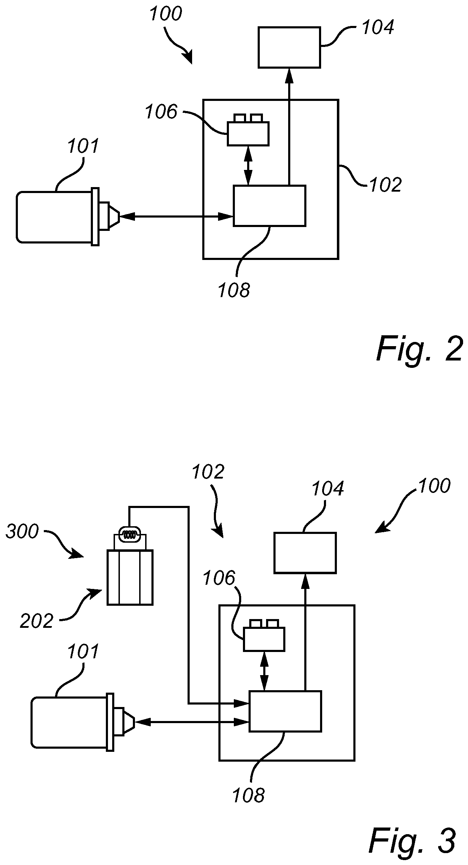

In order to describe the arrangement 100 according to an example, reference is initially made to Fig. 2 which is an exemplary illustration of the arrangement 100 for the vehicle 10 according to an example. As indicated above, the arrangement 100 comprises the electric traction motor 101 operable to apply a torque on the wheels during propulsion and to generate electric energy during braking. The arrangement 100 further comprises the above described energy system 102. The energy system 102 comprises a traction battery 106. As will be described in further detail below, the energy system 102 is configured to feed electric energy from the traction battery 106 to the electric traction motor 101 in a first load condition, i.e. when the electric traction motor propels the vehicle 10, and configured to receive electric energy generated by the electric traction motor 101 in a second load condition. According to an example, the energy system 102 may comprise an electric component arrangement 108 via which electric energy can be fed between at least the electric traction motor 101 and the traction battery 106. According to a non-limiting example, the electric component arrangement 108 may comprise inverter(s), a junction box, etc. Hence, electric energy may be fed between the traction battery 106 and the electric traction motor 101 via the electric component arrangement 108.

As depicted in Fig. 2, the arrangement also comprises the energy dissipater 104 which is connected to the energy system 102. According to the exemplification in Fig. 2, the energy dissipater 104 may be connected to the electric component arrangement 108 of the energy system 102. During operation of the vehicle 10, the energy dissipater 104 can dissipate electric energy received from the energy system 102. For example, when the electric traction motor 101 generates electric energy during braking, the generated electric energy can be fed to the traction battery 106 and/or fed to the energy dissipater 104 which dissipates the energy. Accordingly, and as an example, when the energy system 102 is operating in the second load condition, a charge power ability of the traction battery 106 may not be sufficient, i.e. the traction battery 106 may not be able to absorb the charge power generated by the electric traction motor 101. The energy system 102 may hereby feed a portion of the generated charge power to the traction battery 106 and a remaining portion of the generated charge power to the energy dissipater 104. The portion of generated charge power fed to the traction battery 106 may in such example be below the charge power ability. The energy dissipater can hereby "burn off" electric energy and the traction battery 106 can be protected from high charge spikes. Put it differently, all of, or a portion of, the electric energy generated by the electric traction motor 101 can bypass the traction battery 106 and instead be fed to the energy dissipater 104. As such, the arrangement 100 may also be referred to as an energy distribution arrangement since electric energy can be distributed between e.g. the traction battery 106 and the energy dissipater 104.

Reference is made to Fig. 3, which is an exemplary illustration of the arrangement 100 according to another example. The arrangement 100 in Fig. 3 comprises the same features as described above in relation to Fig. 2, which will therefore not be described in further detail. In addition, the energy system 102 of the arrangement 100 comprises an energy generating arrangement 300. The energy generating arrangement 300 is thus an arrangement that can generate electric energy and is in Fig. 3 exemplified as a fuel cell 202. The fuel cell 202 is configured to generate electric energy by receiving hydrogen and oxygen. The fuel cell 202 is connected to the traction battery 106, i.e. the electric energy generated by the fuel cell 202 can be fed to the traction battery 106. The fuel cell 202 is in Fig. 3 exemplified as connected to the traction battery 106 via the above described electric component arrangement 108. The fuel cell 202 can also be connected to the energy dissipater 104, in Fig. 3 exemplified as connected to the energy dissipater 104 via the electric component arrangement 108.

During operation, the fuel cell 202 can generate electric energy, which electric energy can be fed to the traction battery 106. However, in certain operating situations, the electric energy, or portions of the electric energy, generated by the fuel cell 202 can be fed to the energy dissipater. Hence, the electric energy generated by the fuel cell 202 can be fed to the traction battery 106, to the energy dissipater 104 or to both of the traction battery 106 and the energy dissipater 104.

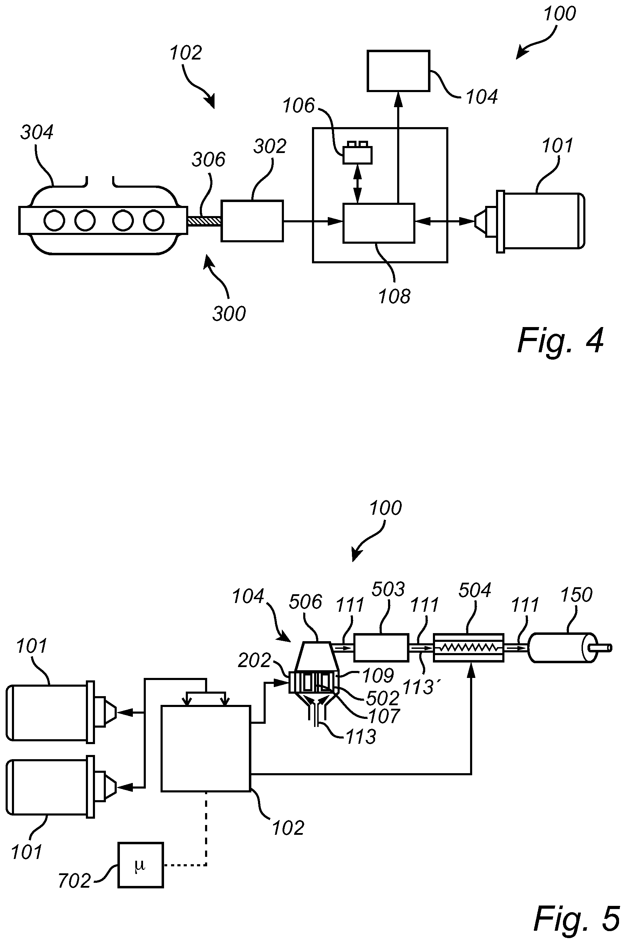

Turning to Fig. 4 which is an exemplary illustration of the arrangement 100 according to another example. The energy system 102 in Fig. 4 also comprises an energy generating arrangement 300 connected to the traction battery 106. The energy generating arrangement 300 in Fig. 4 is an electric generator 302 mechanically connected to an internal combustion engine 304. According to the example depicted in Fig. 4, the electric generator 302 is connected to a crankshaft 306 of the internal combustion engine 304. The electric generator 302 may hereby generate electric energy by the mechanical torque generated by the internal combustion engine 304. The internal combustion engine 304 may be a hydrogen internal combustion engine, i.e. operated by hydrogen gas. The internal combustion engine may however also be operated by diesel or petrol. The arrangement 100 in Fig. 4 can thus also be referred to as a serial hybrid driveline arrangement.

In a similar manner as for the fuel cell 202 described above in relation to Fig. 3, the electric generator 302 is connected to the traction battery 106, i.e. the electric energy generated by the electric generator 302 can be fed to the traction battery 106. The electric generator 302 is in Fig. 4 exemplified as connected to the traction battery 106 via the above described electric component arrangement 108. The electric generator 302 can also be connected to the energy dissipater 104, in Fig. 4 exemplified as connected to the energy dissipater 104 via the electric component arrangement 108.

During operation, the electric generator 302 can generate electric energy, which electric energy can be fed to the traction battery 106. However, in certain operating situations, the electric energy, or portions of the electric energy, generated by the electric generator 302 can be fed to the energy dissipater 104. Hence, the electric energy generated by the electric generator 302 can be fed to the traction battery 106, to the energy dissipater 104 or to both of the traction battery 106 and the energy dissipater 104.

In order to describe a still further example of the arrangement 100, reference is made to Fig. 5. As can be seen in Fig. 5, the arrangement 100 comprises the above-described electric traction motor 101, in Fig. 5 illustrated as a pair of electric traction motors 101. The arrangement 100 further comprises the energy system 102 which is connected to the electric traction motor(s) 101 for supply of electric power to the electric traction motor(s) 101 when the electric traction motor(s) 101 is/are propelling vehicle 10. Although not illustrated in Fig. 5, the energy system 102 also comprises traction battery, and may alternatively also comprise any of the energy generating arrangements 300 described above in relation to Figs. 3 and/or 4. In addition, the energy system 102 may also comprise the above described electric component arrangement 108, which has been omitted for simplifying for the skilled reader.

Moreover, the arrangement 100 comprises the above-described energy dissipater 102. In the exemplification in Fig. 5, the energy dissipater 104 comprises an electric motor 502 and an air compressor 506. The electric motor 502 is connected to the energy system 102. The electric motor 502 may be connected to the energy system 102 via power electronics 202, such as e.g. one or more inverters. To dissipate electric energy, the electric motor 502 is operated by receiving electric power/energy from the energy system 102. The electric motor 502 is hence arranged as an electric energy dissipater. The air compressor 506 comprises a compressor inlet 109 configured to receive a flow of ambient air 113. The air compressor 506 is configured to pressurize the air and exhaust the pressurized air 113' to an air conduit 111. The pressurized air is hence further fed through the air conduit 111 downstream the air compressor 506. The air compressor 506 is connected to, and operable by, the electric motor 502. As illustrated in Fig. 5, the air compressor 106 is mechanically connected to the electric motor 502 by rotor shaft 107 of the electric motor 502. In further detail, the air compressor 506 is operated by rotation of the rotor shaft 107, which rotation is generated by operating the electric motor 502.

Moreover, the exemplified energy dissipater 104 depicted in Fig. 5 also comprises a resistor arrangement 504. The resistor arrangement 504 may be an air-cooled resistor. The air-cooled resistor 504 is arranged in the air conduit 111 in downstream fluid communication with the air compressor 506 for receiving a flow of pressurized air. The air-cooled resistor 504 is also electrically connected to, and operable by, the electric power system 102. Thus, also the air-cooled resistor 504 is also arranged as an electric energy consumer configured to dissipate electric energy. When the air-cooled resistor 504 receives electric energy from the energy system 102, the pressurized air from the air compressor 506 is heated by electrically conductive resistor elements of the air-cooled resistor 504. The pressurized and heated air is thereafter directed towards the ambient environment or other components in need of thermal management. The air from the air-cooled resistor 504 is preferably directed into a muffler 150 of the system 100. The muffler 150 may reduce noise and can also provide a pressure drop of the air.

According to the exemplification in Fig. 5, the arrangement 100 optionally comprises a flow restriction arrangement 503 in the air conduit 111. The flow restriction arrangement 503 is arranged in downstream fluid communication with the air compressor 506 and configured to increase the pressure level of the flow of air exhausted by the air compressor 506. Although not depicted in Fig. 5, it should be readily understood that the processing circuitry 702 can be connected to other components in addition to the illustrated connection to the energy system 102. For example, the processing circuitry 702 may be connected to the electric traction motor(s) 101, the electric motor 502, as well as connected to an upper layer vehicle control system (not shown), etc.

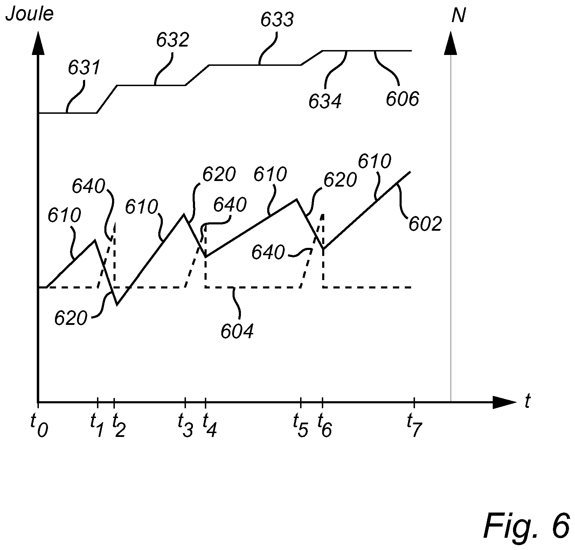

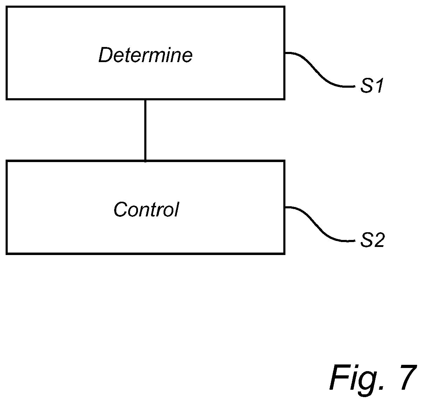

In order to describe a method of controlling energy distribution in the arrangement 100 described above, i.e. operation of the processing circuitry 702 according to examples, reference is made to Figs. 6 and 7. Fig. 6 is an exemplary graph illustration operation of the arrangement according to an example and Fig. 7 is an exemplary flow chart of a method of controlling an energy distribution in the arrangement according to an example. In Fig. 6, the abscissa axis represents time t, while a first ordinate axis represent energy flow and a second ordinate axis represent gear state N.

With initial reference to Fig. 6, the energy flow to/from the electric traction motor 101 over time is illustrated with a first solid line 602, where an upward inclined slope, i.e. upwards in the direction from the left to the right in the graph, indicates an increase of energy fed from the energy system 102 to the electric traction motor 101, while a downward inclined slope, i.e. downwards in the direction from the left to the right in the graph, indicates energy generated by the electric traction motor 101, which energy is fed to the energy system 102. Energy fed to the energy dissipater 104 is illustrated in a dashed line 604. In addition, a gear state of a vehicle transmission is indicated with a second solid line 606.

During a first time period t₀-t₁, the electric traction motor 101 propels the vehicle 10 and the electric traction motor 101 thereby consumes electric energy. The energy system 102 is hereby arranged in a first load condition 610 in which energy is fed from the traction battery 106 to the electric traction motor 101. At time period ti, or slightly before ti, the processing circuitry determines S1 an indication of a load condition change of the energy system from the first load condition 610 to a second load condition 620, in which second load condition 620, the electric traction motor 101 generates electric energy which is fed to the energy system 102. Thus, the energy system 102 receives the electric energy generated by the electric traction motor 101 when the energy system assumes the second load condition 620. In the exemplification of Fig. 6, the indication of the load condition change is determined in response to an anticipated gear state change. In the first time period t₀-t₁, the vehicle transmission is arranged in a first gear state 631. When the transmission changes from the first gear state 631 to a second gear state 632, a second time period t₁-t₂ elapses until the gear state change is completed. During this second time period t₁-t₂, the electric traction motor 101 generates electric energy whereby the energy system 102 assumes the second load condition 620.

In response to the indication of the load condition change, the energy system 102 is controlled S2 to feed 640 electric energy to the energy dissipater 104. In detail, electric energy is fed 640 from the energy system 102 to the energy dissipater 104 in the second time period t₁-t₂. As described above, the processing circuitry 702 may indicate the load condition change slightly before the initiation of the second time period, whereby the energy system 102 may be controlled to feed electric energy to the energy dissipater 104 slightly before the second time period starts.

As can be seen in Fig. 6, the vehicle transmission initiates a change to a third gear state 633 at a third time t₃, and to a fourth gear state 634 at a fifth time t₅. The energy system 102 is thus arranged in the first load condition 610 also during a third time period t₂-t₃, during a fifth time period t₄-t₅ and during a seventh time period t₆-t₇. In a similar vein, the energy system 102 is arranged in the second load condition 620 also during a fourth time period t₃-t₄ and during a sixth time period t₅-t₆.

As described above, and as indicated in Figs. 3 and 4, the energy system 102 may comprise an energy generating arrangement 300. When the energy system 102 assumes the first load condition 610, energy generating arrangement 300 may generate electric energy which may be continuously fed to the energy system 102, preferably to the traction battery 106. When the energy system 102 changes load condition from the first load condition 610 to the second load condition 620, the energy generating arrangement 300 may hereby continue to generate and feed electric energy to the energy system. The processing circuitry 702 can determine a charge power ability of the traction battery 106 as well as a charge power level received by the energy system 102 when the energy system 102 is arranged in the second load condition 620, in this example the charge power level is the accumulated charge power of the energy generating arrangement 300 and the electric traction motor 101. When the charge power level exceeds the charge power ability of the traction battery 106, the energy system 102 can be controlled to feed at least a portion of the charge power to the traction battery 106, while a remaining portion of the charge power can be fed to the energy dissipater 104. In other words, the processing circuitry 702 can determine a surplus power level which is a difference between the power level generated by the energy generating arrangement 300 and the electric traction motor 101 in the second load condition 620, and the charge power ability of the traction battery 106. The processing circuitry 702 may thereafter control the energy system 102 to feed electric energy at the surplus power level to the energy dissipater 104 in response to indication of the load condition change.

As described above, the energy generating arrangement 300 generates electric energy which is fed to the energy system 102. During the second load condition 620, energy can therefore be fed from the energy generating arrangement 300 to the energy dissipater 104 without passing the traction battery 106.

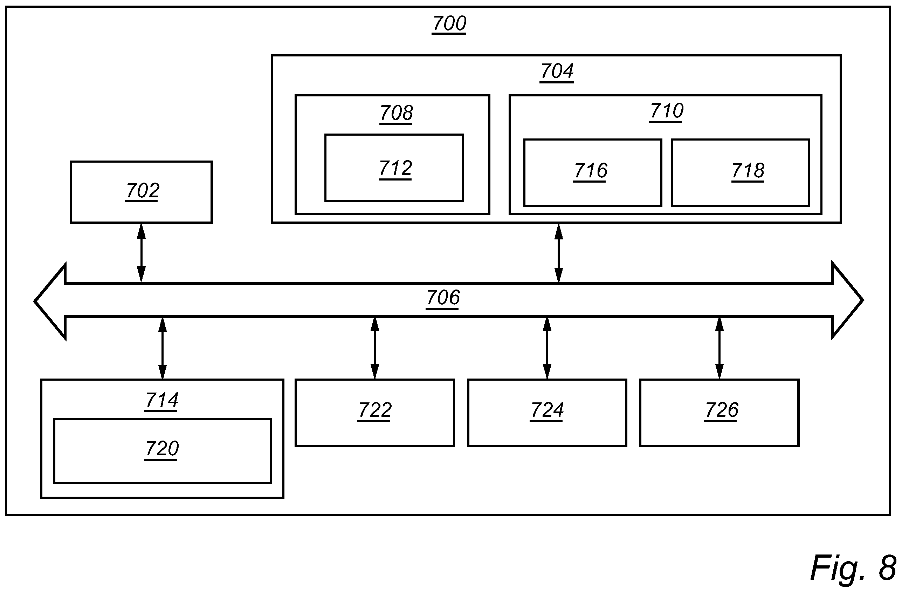

Fig. 8 is a schematic diagram of a computer system 700 for implementing examples disclosed herein. The computer system 700 is adapted to execute instructions from a computer-readable medium to perform these and/or any of the functions or processing described herein. The computer system 700 may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system 700 may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system 700 may comprise at least one computing device or electronic device capable of including firmware, hardware, and/or executing software instructions to implement the functionality described herein. The computer system 700 may include processing circuitry 702 (e.g., processing circuitry including one or more processor devices or control units), a memory 704, and a system bus 706. The computer system 700 may include at least one computing device having the processing circuitry 702. The system bus 706 provides an interface for system components including, but not limited to, the memory 704 and the processing circuitry 702. The processing circuitry 702 may include any number of hardware components for conducting data or signal processing or for executing computer code stored in memory 704. The processing circuitry 702 may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry 702 may further include computer executable code that controls operation of the programmable device.

The system bus 706 may be any of several types of bus structures that may further interconnect to a memory bus (with or without a memory controller), a peripheral bus, and/or a local bus using any of a variety of bus architectures. The memory 704 may be one or more devices for storing data and/or computer code for completing or facilitating methods described herein. The memory 704 may include database components, object code components, script components, or other types of information structure for supporting the various activities herein. Any distributed or local memory device may be utilized with the systems and methods of this description. The memory 704 may be communicably connected to the processing circuitry 702 (e.g., via a circuit or any other wired, wireless, or network connection) and may include computer code for executing one or more processes described herein. The memory 704 may include non-volatile memory 708 (e.g., read-only memory (ROM), erasable programmable read-only memory (EPROM), electrically erasable programmable read-only memory (EEPROM), etc.), and volatile memory 710 (e.g., random-access memory (RAM)), or any other medium which can be used to carry or store desired program code in the form of machine-executable instructions or data structures and which can be accessed by a computer or other machine with processing circuitry 702. A basic input/output system (BIOS) 712 may be stored in the non-volatile memory 708 and can include the basic routines that help to transfer information between elements within the computer system 700.

The computer system 700 may further include or be coupled to a non-transitory computer-readable storage medium such as the storage device 714, which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device 714 and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device 714 and/or in the volatile memory 710, which may include an operating system 716 and/or one or more program modules 718. All or a portion of the examples disclosed herein may be implemented as a computer program 720 stored on a transitory or non-transitory computer-usable or computer-readable storage medium (e.g., single medium or multiple media), such as the storage device 714, which includes complex programming instructions (e.g., complex computer-readable program code) to cause the processing circuitry 702 to carry out actions described herein. Thus, the computer-readable program code of the computer program 720 can comprise software instructions for implementing the functionality of the examples described herein when executed by the processing circuitry 702. In some examples, the storage device 714 may be a computer program product (e.g., readable storage medium) storing the computer program 720 thereon, where at least a portion of a computer program 720 may be loadable (e.g., into a processor) for implementing the functionality of the examples described herein when executed by the processing circuitry 702. The processing circuitry 702 may serve as a controller or control system for the computer system 700 that is to implement the functionality described herein.

The computer system 700 may include an input device interface 722 configured to receive input and selections to be communicated to the computer system 700 when executing instructions, such as from a keyboard, mouse, touch-sensitive surface, etc. Such input devices may be connected to the processing circuitry 702 through the input device interface 722 coupled to the system bus 706 but can be connected through other interfaces, such as a parallel port, an Institute of Electrical and Electronic Engineers (IEEE) 1394 serial port, a Universal Serial Bus (USB) port, an IR interface, and the like. The computer system 700 may include an output device interface 724 configured to forward output, such as to a display, a video display unit (e.g., a liquid crystal display (LCD) or a cathode ray tube (CRT)). The computer system 700 may include a communications interface 726 suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

### EXAMPLE LIST

Example 1. An arrangement for a vehicle, the arrangement comprising: an electric traction motor, an energy system comprising a traction battery, the energy system being configured to feed electric energy from the traction battery to the electric traction motor in a first load condition, and configured to receive electric energy generated by the electric traction motor in a second load condition, and an energy dissipater electrically connected to the energy system, wherein the arrangement further comprises processing circuitry configured to: determine an indication of a load condition change of the energy system from the first load condition to the second load condition, and control the energy system to feed electric energy to the energy dissipater in response to the indication of the load condition change.

Example 2. The arrangement of example 1, wherein the processing circuitry is further configured to: determine a charge power ability of the traction battery, determine a charge power level received by the energy system when assuming the second load condition, and control the energy system to feed electric energy to the energy dissipater in further response to the charge power level exceeding the charge power ability.

Example 3. The arrangement of any one of the preceding examples, wherein the energy system further comprises an energy generating arrangement connected to the traction battery, the energy generating arrangement being configured to generate electric energy when the energy system assumes the first load condition, wherein the processing circuitry is configured to: control the energy generating arrangement to generate electric energy also when the energy system changes load condition from the first load condition to the second load condition.

Example 4. The arrangement of example 3, wherein the processing circuitry is further configured to: control the energy generating arrangement to generate electric energy during the second load condition.

Example 5. The arrangement of any one of examples 3 or 4, wherein the energy generating arrangement is configured to generate electric energy at a first power state when the energy system assumes the first load condition, and wherein the processing circuitry is configured to control the energy generating arrangement to generate electric energy at the first power state when the electric system changes load condition from the first load condition to the second load condition.

Example 6. The arrangement of any one of examples 3-5, wherein the processing circuitry is configured to: determine a charge power ability of the traction battery, determine a surplus power level, the surplus power level being a difference between a power level generated, in the second load condition, by the energy generating arrangement and the electric traction motor, and the charge power ability of the traction battery, and control the energy system to feed electric energy corresponding to the surplus power level to the energy dissipater in response to indication of the load condition change.

Example 7. The arrangement of any one of examples 3-6, wherein the energy generating arrangement comprises a fuel cell electrically connected to the traction battery.

Example 8. The arrangement of example 7, wherein the fuel cell is electrically connected to the energy dissipater.

Example 9. The arrangement of example 8, wherein the processing circuitry is configured to control the energy system to feed electric energy from at least one of the fuel cell and the traction battery to the energy dissipater in response to the load condition change.

Example 10. The arrangement of any one of examples 3 - 9, wherein the energy generating arrangement comprises an electric generator mechanically connectable to an internal combustion engine, the electric generator being connected to the traction battery.

Example 11. The arrangement of example 10, wherein the electric generator is electrically connected to the energy dissipater.

Example 12. The arrangement of example 11, wherein the processing circuitry is configured to control the energy system to feed electric energy from at least one of the electric generator and the traction battery to the energy dissipater in response to the load condition change.

Example 13. The arrangement of any one of the preceding examples, wherein the processing circuitry is configured to determine the indication of the load condition change in response to receiving a request of an anticipated change in load condition from the first load condition to the second load condition, wherein the processing circuitry is further configured to: control the energy system to feed electric energy to the energy dissipater prior to the load condition change.

Example 14. The arrangement of any one of the preceding examples, wherein the processing circuitry is configured to determine the load condition change in response to an anticipated gear state change of the vehicle.

Example 15. The arrangement of any one of the preceding examples, wherein the energy dissipater comprises an air compressor, the air compressor being configured to dissipate electric energy by pressurizing a flow of air.

Example 16. The arrangement of example 15, wherein the energy dissipater further comprises an electric motor mechanically connected to the air compressor, the electric motor being electrically connected to the energy system.

Example 17. The arrangement of any one of the preceding examples, wherein the energy dissipater comprises a resistor arrangement.

Example 18. The arrangement of example 17 when dependent on any one of examples 15 or 16, wherein the resistor arrangement is an air-cooled resistor arranged in downstream fluid communication with the air compressor.

Example 19. A method of controlling an energy distribution in an arrangement of a vehicle, the arrangement comprises: an electric traction motor, an energy system comprising a traction battery, the energy system being configured to feed electric energy from the traction battery to the electric traction motor in a first load condition, and configured to receive electric energy generated by the electric traction motor in a second load, and an energy dissipater electrically connected to the energy system, the method comprising: determining an indication of a load condition change of the energy system from the first load condition to the second load condition, and controlling the energy system to feed electric energy to the energy dissipater in response to the indication of the load condition change.

Example 20. A computer program product comprising program code for performing, when executed by the processing circuitry, the method of example 19.

Example 21. A non-transitory computer-readable storage medium comprising instructions, which when executed by the processing circuitry, cause the processing circuitry to perform the method of example 19.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. An arrangement (100) for a vehicle, the arrangement comprising:
an electric traction motor (101),
an energy system (102) comprising a traction battery (106), the energy system being configured to feed electric energy from the traction battery to the electric traction motor in a first load condition, and configured to receive electric energy generated by the electric traction motor in a second load condition, and
an energy dissipater (104) electrically connected to the energy system,
wherein the arrangement further comprises processing circuitry (702) configured to:
determine an indication of a load condition change of the energy system from the first load condition to the second load condition, and
control the energy system to feed electric energy to the energy dissipater in response to the indication of the load condition change.

2. The arrangement of claim 1, wherein the processing circuitry is further configured to:
determine a charge power ability of the traction battery (106),
determine a charge power level received by the energy system (102) when assuming the second load condition, and
control the energy system (102) to feed electric energy to the energy dissipater (104) in further response to the charge power level exceeding the charge power ability.

3. The arrangement of any one of the preceding claims, wherein the energy system further comprises an energy generating arrangement (300) connected to the traction battery, the energy generating arrangement being configured to generate electric energy when the energy system assumes the first load condition, wherein the processing circuitry is configured to:
control the energy generating arrangement to generate electric energy also when the energy system changes load condition from the first load condition to the second load condition.

4. The arrangement of claim 3, wherein the processing circuitry is further configured to:
control the energy generating arrangement to generate electric energy during the second load condition.

5. The arrangement of any one of claims 3 or 4, wherein the energy generating arrangement is configured to generate electric energy at a first power state when the energy system assumes the first load condition, and wherein the processing circuitry is configured to control the energy generating arrangement to generate electric energy at the first power state when the electric system changes load condition from the first load condition to the second load condition.

6. The arrangement of any one of claims 3-5, wherein the processing circuitry is configured to:
determine a charge power ability of the traction battery,
determine a surplus power level, the surplus power level being a difference between a power level generated, in the second load condition, by the energy generating arrangement and the electric traction motor, and the charge power ability of the traction battery, and
control the energy system to feed electric energy corresponding to the surplus power level to the energy dissipater in response to indication of the load condition change.

7. The arrangement of any one of claims 3-6, wherein the energy generating arrangement comprises at least one of a fuel cell (202) electrically connected to the traction battery, and an electric generator mechanically connectable to an internal combustion engine, the electric generator being connected to the traction battery.

8. The arrangement of claim 7, wherein the fuel cell is electrically connected to the energy dissipater, the processing circuitry being configured to control the energy system to feed electric energy from at least one of the fuel cell and the traction battery to the energy dissipater in response to the load condition change.

9. The arrangement of any one of the preceding claims, wherein the processing circuitry is configured to determine the indication of the load condition change in response to receiving a request of an anticipated change in load condition from the first load condition to the second load condition, wherein the processing circuitry is further configured to:
control the energy system to feed electric energy to the energy dissipater prior to the load condition change.

10. The arrangement of any one of the preceding claims, wherein the processing circuitry is configured to determine the load condition change in response to an anticipated gear state change of the vehicle.

11. The arrangement of any one of the preceding claims, wherein the energy dissipater comprises an air compressor, the air compressor being configured to dissipate electric energy by pressurizing a flow of air.

12. The arrangement of any one of the preceding claims, wherein the energy dissipater comprises a resistor arrangement.

13. A method of controlling an energy distribution in an arrangement of a vehicle, the arrangement comprises:
an electric traction motor,
an energy system comprising a traction battery, the energy system being configured to feed electric energy from the traction battery to the electric traction motor in a first load condition, and configured to receive electric energy generated by the electric traction motor in a second load condition, and
an energy dissipater electrically connected to the energy system,
the method comprising:
determining an indication of a load condition change of the energy system from the first load condition to the second load condition, and
controlling the energy system to feed electric energy to the energy dissipater in response to the indication of the load condition change.

14. A computer program product comprising program code for performing, when executed by the processing circuitry, the method of claim 13.

15. A non-transitory computer-readable storage medium comprising instructions, which when executed by the processing circuitry, cause the processing circuitry to perform the method of claim 13.
